# EUROPEAN PATENT APPLICATION

(11) **EP 4 826 332 A1**
(43) Date of publication of application: **21.10.2026**
(21) Application number: 26168166.2
(22) Date of filing: 26.03.2026
(51) Int. Cl.: G01B 21/06, G01N 21/89, H01M 4/139

(54) **DELAYED SCANNING OF MOVING SHEETS**

(30) Priority: 15.04.2025 US 202519179245
(71) Applicant: Honeywell International Inc., Charlotte, NC 28202 (US)
(72) Inventor: HUGHES, Michael, Charlotte, 28202 (US)
(74) Representative: Haseltine Lake Kempner LLP

(57) **Abstract**

An example method for delayed scanning of a moving discontinuous sheet of patches in a manufacturing process comprises: initiating a first scan with a scanning sensor to scan a first path across the patches; initiating a second scan with the scanning sensor after completion of the first scan to scan a second path across the patches; calculating a delay time to position a third scan path of within a threshold distance from first scan path, the second scan path, or both the first scan path and the second scan path; and delaying initiation of a third scan with the scanning sensor by the calculated delay time; and initiating the third scan subsequent to elapse of the delay time.

## Description

### Technical Field

The present disclosure generally relates to sheet making control systems and, more particularly, to sheet making control systems where measuring devices scan across a moving or travelling sheet. In particular, the present disclosure relates to delayed scanning of moving sheets (e.g., moving discontinuous sheets of patches of electrodes) in a manufacturing process.

### Background

In the manufacture of sheet materials, scanning sensors are commonly used to measure and control various properties during production. These sensors typically traverse back and forth across moving sheets to detect characteristics such as basis weight and coating thickness. The scanning process generates measurement data that can be analyzed to understand variations in material properties across both machine-direction and cross-direction dimensions. Typically sheet materials such as paper or multi-layered materials are intended to have uniform profile e.g., in both the machine-direction and cross-direction.

However, some manufactured materials are intended to have a discontinuous or non-uniform profile. For instance, patch coating, otherwise known as intermittent coating, is a common format for producing roll-to-roll Lithium Ion Battery electrodes. The process involves applying discrete coatings onto continuous rolls of substrate material (e.g., metal foil or another substrate material). The result is a plurality of discontinuous (e.g., spaced apart in the machine-direction and in the cross-direction) patches that are formed into electrodes. Stated differently, the electrode patches comprise discrete coated areas of the sheet that are separated by uncoated or substantially uncoated areas of the sheet.

Each patch is intended to be the same shape, size, and coating density as every other patch (e.g., have the same uniform dimensions, including thickness, and same uniform areal weight). Stated differently, each electrode or patch of electrodes is intended to have a uniform thickness and weight profile albeit with gaps or areas of a reduced amount of material located between each of the electrodes in a given patch. Determining the presence of manufacturing defects (e.g., non-uniform thickness) of the electrodes and hence the patches can be challenging due to discontinuous arrangement of the electrodes (e.g., with gaps between each of the electrodes). However, obtaining accurate thickness and weight measurements and thereby identifying any defects (e.g., deviations in thickness or weight of electrodes) is a key criterion for optimal battery performance which employ the electrodes. For instance, an accurate thickness measurement of the coating can be used to control the coating in cross-direction (CD) and machine-direction (MD) and later the calendering process.

While some non-uniformities can be mitigated by adjustments to quasi-steady state actuators, such as slot die opening sizes, others occur at a faster time scale, and are caused by the dynamics of the intermittent coating process, such as pressure waves in the slurry coating system caused by the on/off process, or inertial effects from the calender rolls interacting with coating patch edges.

The coating process employs sophisticated sensors mounted on supporting frames that extend across the manufacturing line. These sensors work in conjunction with profile analyzers and control systems to collect and process measurement data. Scanning sensors typically operate at uniform speeds of approximately 150-350 millimeters per second relative to sheet movement of approximately 20-100 meters per minute. Modern scanning systems, such as those described herein, employ various measurement technologies including nuclear gauges, X-ray sensors, and optical devices to detect properties like basis weight and thickness.

For instance, the sensors (e.g., a first sensor positioned above the sheet of manufactured material and a second sensor position below the sheet of manufactured materials) can be mounted on frames that allow them to traverse across the sheet while maintaining precise measurement capabilities. It is particularly important to produce electrode sheets with a uniform coating on the top and bottom sides of the material. The sensor data helps operators understand the uniformity and quality of the manufactured material e.g., from both the top and bottom sides of the material, permitting them to make necessary adjustments to process parameters to maintain product specifications. For instance, defects in the machine-direction and defects in the cross-direction can be remediated via different remediation mechanisms (e.g., altering an actuator and/or altering calendering conditions, etc.).

Hence, what is desired is systems and methods that can readily detect manufacturing defects (e.g., systematic defects occurring periodically) in discontinuous manufactured products such as in roll-to-roll lithium ion battery electrodes, discern between machine and cross-direction defects, and yet can minimize a total quantity of scans to detect the presence of such manufacturing defects.

### Summary

The present disclosure generally relates to sheet making control systems and, more particularly, to sheet making control systems where measuring devices scan across a moving or travelling sheet. In particular, the present disclosure relates to delayed scanning of moving sheets (e.g., moving discontinuous sheets of electrode patches) in a manufacturing process. While various embodiments are described herein the in context of roll-to-roll lithium ion battery electrodes, the present disclosure is not so limited. For instance, the present disclosure is applicable to other discontinuous and continuous (e.g., paper making) manufacturing processes.

As detailed herein, the present disclosure is directed to delayed scanning of a moving sheet such as delayed scanning of a moving discontinuous sheet of electrode patches. For instance, efficient scanning of representative patches may permit readily identifying various defects such as systematic or repetitive defects (e.g., that occur in multiple instances in the machine-direction in the representative patch). Desirably, such delayed scanning can reduce an amount of unscanned area between adjacent scan paths on a representative patch and can thereby promote readily detect manufacturing defects in both the machine and cross-direction in discontinuous manufactured products such as in roll-to-roll lithium ion battery electrodes. Additionally, such delayed scanning can reduce a total quantity of scans used to identify defects in a moving sheet.

For instance, such delayed scanning is performed by determining or calculating an ideal amount of delay time between a subsequent scan and a previous scan (e.g., between a third scan and a second scan) to avoid overlapping the subsequent scan (e.g., the third scan) with one or more previous scans (e.g., a first scan and a second scan) thereby ensuring efficient and timely scanning and reduction of an unscanned amount of area on the moving sheet. For example, the subsequent scan can be strategically timed (delayed) so that its scan path is positioned between (e.g., equidistantly between) the scan paths of previous scans such as the first and second scans. This positioning minimizes the amount of unscanned area between scan paths, resulting in a substantially uniform distribution of unscanned regions thereby enhancing the accuracy of detection of defects in both the machine-direction and the cross-direction.

That is, minimizing the unscanned area between scan paths on a representative patch offers several benefits. It can reduce the total number of scans required to obtain a complete scan CD and MD profile of a representative patch of a moving sheet and thereby improve the accuracy of interpolation between scan paths when generating a complete visualization of the moving sheet. By using fewer, strategically delayed scans, the system can update measurements more quickly and more comprehensively than traditional scanning methods which ignore patch placement.

The delayed-start scanning algorithm further ensures uniform patch coverage while minimizing redundant scanning of previously measured areas. This is achieved by positioning subsequent scans equidistantly between previous scan paths until reaching a minimum unscanned width threshold. Additionally, the systems and methods described herein can either replace previous scan data entirely or apply filtering factors based on detected changes, which allows for efficient updates to patch representations without requiring a full rescanning process. By minimizing unnecessary scans and using interpolation to complete the patch representation, the system maximizes scanning resource efficiency while maintaining comprehensive monitoring capabilities.

The above improvements collectively enhance system performance, efficiency, and accuracy, as detailed herein.

Moreover, delayed scanning of patches on a moving discontinuous sheet can promote readily visualizing the presence of any defects. For instance, delayed scanning of patches on a moving discontinuous sheet can provide separate machine-direction and cross-direction profiles to permit readily identifying defects in either or both of the machine-direction and the cross-direction. Alternatively, or in addition, the complete scan profile can be displayed as a three-dimensional map (e.g., including different colored areas to indicate the presence of defects such as different weights of material located on the moving sheet, etc.), as detailed herein. In contrast, if the technique is not used, repetitive coating defects with MD periodicity can be misidentified as non-repetitive CD defects and *vice versa.* As the remedy for the different (CD or MD) types of defects is different, this technique offers significant advantages.

A particular example of the present disclosure includes an illustrative method for delayed scanning of a moving discontinuous sheet of patches in a manufacturing process, comprising: initiating a first scan with a scanning sensor to scan a first path across the patches; initiating a second scan with the scanning sensor after completion of the first scan to scan a second path across the patches; calculating a delay time to position a third scan path of within a threshold distance from first scan path, the second scan path, or both the first scan path and the second scan path; and delaying initiation of a third scan with the scanning sensor by the calculated delay time; and initiating the third scan subsequent to elapse of the delay time.

Another example of the present disclosure includes a non-transitory, computer-readable medium including instructions that when executed by a processor cause the processor to: initiate a first scan with a scanning sensor at an initial position to scan a first scan path across a moving discontinuous sheet of patches; calculate a first delay time to position a second scan path of a second scan a threshold distance from the first scan path; subsequent to completion of the first scan and elapse of a first delay time, initiate the second scan to position the second scan path within the threshold distance from the first scan path; calculate a second delay time to position a second scan path of a second scan a threshold distance from the first scan path; and subsequent to completion of the second scan and elapse of a second delay time, initiate the third scan to position the third scan path within the threshold distance from the second scan path.

Another example of the present disclosure includes a non-transitory, computer-readable medium including instructions that when executed by a processor cause the processor to: initiate a first scan with a scanning sensor at an initial position to scan a first path across a moving discontinuous sheet of patches; initiate a second scan with the scanning sensor after completion of the first scan to scan a second path across the patches, wherein the second scan is initiated after completion of the first scan; calculate a delay time to position a third scan path of the scanning sensor between the first scan path and the second scan path; and delay initiation of a third scan with the scanning sensor by the calculated delay time; and initiate the third scan subsequent to elapse of the delay time, wherein the third scan is initiated a second amount of time after completion of the second scan.

Another example of the present disclosure includes a system for scanning electrode patches, comprising: a scanning sensor configured to traverse a moving discontinuous sheet of electrode patches, wherein the moving discontinuous sheet of electrode patches; and a controller configured to: initiate a first scan with a scanning sensor at an initial position to scan a first path across the moving discontinuous sheet of electrode patches; initiate a second scan with the scanning sensor after completion of the first scan to scan a second path across the moving discontinuous sheet of electrode patches, wherein the second scan is initiated a first amount of time after completion of the first scan; calculate a delay time to position a third scan path of the scanning sensor equidistant between the first scan path and the second scan path; and delay initiation of a third scan with the scanning sensor by the calculated delay time; initiate the third scan immediately subsequent to elapse of the delay time, wherein the third scan is initiated a second amount of time after completion of the second scan, wherein the second amount of time is larger than the first amount of time interpolating between scan paths including the first scan path, the second scan path, and the third scan path to generate a complete visualization of the moving discontinuous sheet of electrode patches; and displaying: a visual representation of the complete visualization of the electrode patches including a visual representation of one or more manufacturing defects in the electrode patches; a machine-direction profile of one or more of the electrode patches; a cross-direction profile of the one or more of the electrode patches; or any combination thereof.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
FIG. 1 shows a portion of a sheet manufacturing line;
FIG. 2 is a perspective view of an illustrative scanner for sheet manufacturing;
FIG. 3 shows how a scanner crosses and scans a moving sheet of material in with delayed scanning of the moving sheet;
FIG. 4 is an example of a method flow diagram for delayed scanning of moving sheets; and
FIG. 5 is a view of a representative machine-direction and cross-direction profiles consistent with delayed scanning of moving sheets.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

Various references are made herein to different scans and their resulting scan paths, such as a first scan, a second scan, a third scan, etc. However, unless otherwise stated, such references are not necessarily intended to indicate a particular timing or sequence of these scans and their resulting scan paths. On-line measurements are used to detect properties of sheet materials during manufacture to enable prompt control of the sheet-making processes and, thus, to assure sheet quality while reducing the quantity of substandard sheet material which is produced. One of the main complications in making on-line measurements during sheet-making is that the physical properties of sheet materials usually vary in the machine direction (MD) as well as in the cross direction (CD). MD refers to the direction of travel of the sheet material during manufacture, and CD refers to the direction across the surface of a sheet perpendicular to the MD.

To detect variations in sheet materials, scanning sensors are employed that periodically traverse back and forth across a sheet on which a process is being performed in the cross direction while detecting values of a selected sheet property such as basis weight or caliper along each scan. Normally, the sheet being produced is traversed from edge to edge during each scan. The time required for a typical scan is generally between a few seconds to tens of seconds depending on the cross-direction length, which can be many meters. The rate at which measurement readings are provided by such scanners is usually adjustable; a typical rate is about one measurement reading every millisecond.

In practice, measurement information provided by scanning sensors is usually assembled after each scan to provide a "profile" of the detected sheet property in the cross direction. In other words, each profile is comprised of a succession of sheet measurements at adjacent locations in the cross direction. The purpose of the profiles is to allow cross-directional variations in sheet properties to be detected easily. Based upon the detected cross-directional variations in the detected sheet property, appropriate control adjustments may be made to the sheet-making machine with the goal of reducing profile variations both in the cross direction and in the machine direction.

A scanning sensor that periodically traverses a sheet at generally constant speed cannot measure the selected sheet property at locations which are aligned exactly perpendicular to the longitudinal edges of the sheet. Due to finite sheet velocity, scanning sensors actually travel diagonally across the sheet surface, with the result that consecutive scanning paths have a zigzag pattern with respect to the direction perpendicular to the longitudinal edges of the sheet. In practice, it is typical to calculate an average of profile measurements over each scan.

In fabricating anode or cathode electrodes, a metal foil from metal rolls is continuously coated with a mixture of active material. To achieve and maintain the quality of continuous, roll-to-roll production of electrodes, there are constant, online measurements of quality factors that are strongly linked to battery performance. Slitting machines cut the finished coated metal foils into sheets of electrodes that are assembled into the cells and batteries.

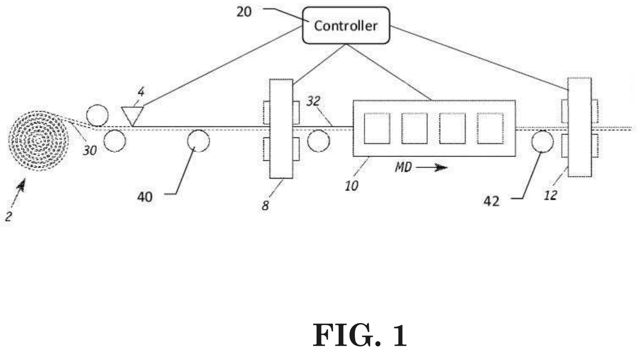

Figure 1 shows a portion of a sheet manufacturing line. The line is described in terms of coating a metal web or sheet that is used in fabricating electrodes for lithium-ion electrochemical cells and batteries. However, the manufacturing line may be used for any manufacturing process using a sheet of material, including fabrics, other metal sheets, etc.

If the line is used for fabricating electrodes for batteries, to make anodes, the electrode coating includes anodic active materials such as graphite and, to make cathodes, the electrode coating includes cathodic active materials such as a lithium metal oxide. Electrodes include a current collector metal foil that is coated on one or both sides of the foil with electrode slurry which can also include carbon black, binder and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material. Parameters and materials can vary widely, and the present concepts are not limited to this one particular environment.

As shown in FIG. 1, roll 2 is unwound by an unwinder and supplies a continuous sheet of material or sheet 30 that is coated on the top (or first) surface with a layer of electrode slurry by coater 4 which can comprise a tape casting coating device. The basis weight, thickness and other characteristics of the sheet of metal web 30 from roll 2 are usually known. In some systems, a scanner may also be positioned to measure properties of the sheet coming off of the roll, that is, for a battery manufacturing process, bare foil properties before coating may be measured and known.

Some systems, such as disclosed in US PG Pub 2023/0391571 may include markers that apply fiducial markers to the sheet 30, and readers at various points to determine with precision the MD of the sheet by reading the fiducial markers. Such fiducial marking and reading systems can be expensive, and take up space in the line. Space is at a premium in manufacturing environment, and using less equipment reduces complexity and up-front as well as maintenance and other ongoing costs. Applying fiducial markers is sometimes not even possible as there may be no place on the sheet to place markings; that is, coating processes may use the full width of the sheet material.

The present systems and methods do not rely on fiducials from markers and scanning thereof, but may be used in conjunction with such systems as desired.

Coater 4 includes actuators that control a doctor blade to regulate the amount of slurry that is extruded onto sheet 30. Dryer 10 removes excess solvents and cures the slurry that is on the moving coated sheet 32 to form an electrode layer on the sheet. There may be several coaters 4 and/or dryers 10.

Scanner 8 measures one or more properties of the moving coated sheet entering dryer 10. Down the line, scanner 12 measures one or more properties of the moving coated sheet exiting dryer 10. In some examples, the measurements at scanner 8 can be compared with those taken at scanner 12 as part of monitoring processes and conditions inside the dryer 10. The scanners 8, 12 can be O-frame scanners and/or C-frame scanners such as those available from HONEYWELL INC., among other possible types of scanners.

Each scanner 8, 12 may have nearby a tachometer, such as shown at 40, 42. The tachometer turns as the sheet material 30 passes by, and produces a pulse train, the periodicity or frequency of which is indicative of the velocity of the sheet material. Differences in tachometer speed can arise from one location to another if, for example, the system includes one or more dancer rolls (not shown) which can vary the length of sheet material between the tachometers 40, 42 and hence sensors 8, 12.

FIG. 1 shows a very simple manufacturing line; implementations may have several coaters 4, dryers 10 and other devices or systems. Several layers of coating may be applied, dried, cured, etc., and coatings can be applied to both sides of the sheet. More than two scanners 8, 10 may be present. Further operations, including cutting or slitting the sheet, may take place. A dancer roll may be included, as detailed further below, in some examples. A system controller 20 may be provided as an overarching controller for the various components in the system, and can be coupled for data communication and control signal communication to each of the manufacturing line systems (2, 4, 40, 8, 10, 42, 12, etc.) by, for example and without limitation, a data bus, ethernet or other wired coupling, optical cable, and/or wireless communications systems including any of Bluetooth^{™}, WiFi, or other 802.11 communications or other standards, as suits a given installation, plant, geography, etc.

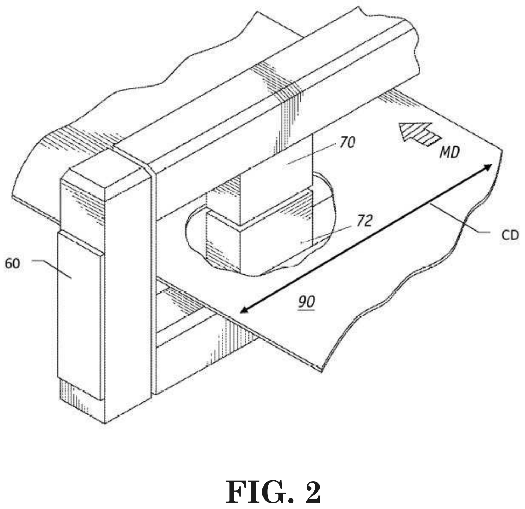

FIG. 2 is a perspective view of an illustrative scanner for sheet manufacturing. The scanner 60 is configured for measuring properties of a moving sheet of material. The scanner 60 includes scanning heads 70, 72 that may, for example, enclose or house a radiation source and radiation detector, respectively. The radiation source may emit radiation, such as beta rays, that is directed toward an area on the coated sheet 90 which is moving in the MD. The intensity of the radiation from head 70 which is transmitted through the coated sheet is sensed by the radiation detector in head 72. The detector senses the amount of radiation absorbed by the coated sheet which gives a direct indication of the basis weight of the material. In this example, the radiation source emits beta radiation for the measurement of weight or thickness (caliper). Either or each scanner head 70, 72 may house an infrared sensor that detects radiation and yields a sheet temperature profile. Another technique is optical translation for moving the interrogation spot as described in U.S. Pat. No. 7,528,400, which is incorporated herein by reference.

Each scanning head 70, 72 may include a radiation source and/or radiation detector, or may include both a radiation source and a radiation detector. Measurements can thus be taken by passing radiation from one scanning head, through the sheet 90, and to a detector in the other scanning head. Measurements can also be taken reflectively, as by generating radiation at a scanning head, directed toward the sheet 90, and measuring radiation reflected back to a detector in the same scanning head, if desired.

The dual scanner heads 70, 72 face one another and define a measurement gap that accommodates the sheet 90 (with and/or without coatings), which moves in the MD. One or more motors in the scanner 60 control the movement of heads 70 and 72, respectively. The cross directional movement of the dual scanner heads is synchronized with respect to speed and direction to maintain alignment of the dual scanner heads 70, 72. As the dual scanner heads 70, 72 move, the tachometer readouts are captured by the system so that position of the scanner heads with respect to position of the sheet 90 as it moves in the MD can be maintained.

Weight, caliper and temperature are merely examples of characteristics that can be measured using the scanning heads. Scanning may include seeking particular chemical markers, such as by scanning with one or more wavelengths of light to detect the presence, absence, or concentration of materials in the sheet and/or coating thereon. Any suitable or desired characteristic may be scanned, as suits a particular implementation. Different scanners and/or settings for scanners can be used throughout a given manufacturing line.

In some examples, the various components of the manufacturing system include controllers and/or processors that manage operation of the individual components. As shown in FIG. 1, the overall system can be managed by a system controller 20. The system controller 20 may take many forms, including, for example, a microcontroller or microprocessor, coupled to a memory storing readable instructions for performing methods as described herein, as well as providing configuration of the controller for the various examples that follow. Some examples may use a computer as the system controller.

The system controller 20 may include one more application-specific integrated circuits (ASIC) to provide additional or specialized functionality, such as, without limitation a signal processing ASIC that can filter received signals from one or more sensors using digital filtering techniques. Logic circuitry, state machines, and discrete or integrated circuit components may be included as well. The skilled person will recognize many different hardware implementations are available for a controller.

In an illustrative configuration, for example, one or more busses, optical fiber networks, ethernet, other hardware links and/or wireless or other communications links are provided between the various components and the system controller 20. The system controller 20 can issue commands to the various elements of the system and receives data and other feedback from each component. The system controller 20 can thus operate to synchronize operations by the various parts of the manufacturing line, including the scanners, coaters, dryers, and drive motors for moving the sheet through the system from roll 2 to an end roll (not shown) or cutting apparatus, for example.

The system controller 20 may be a separate component from the rest of the system as shown in FIG. 1. Optionally, instead, the system controller 20 may be implemented on a controller associated with one of the various components shown in the system, for example and without limitation, by providing a machine readable instruction set on a non-transitory medium operably linked to the scanners, dryer, coater, etc. in the system. The system controller may instead be implemented as a cloud-based system such as on a remote server.

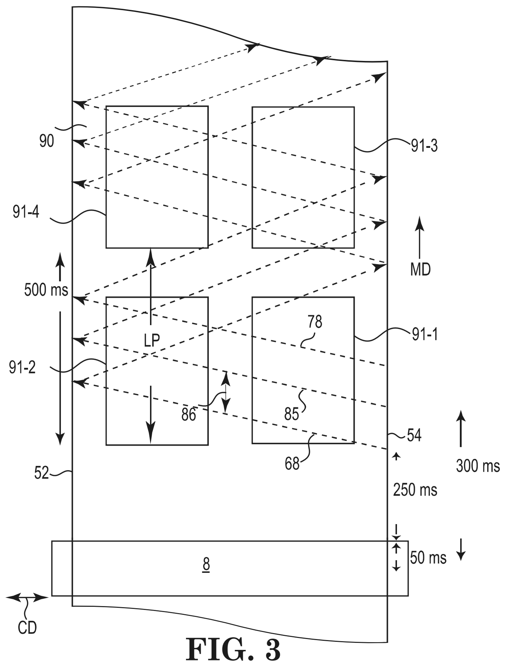

FIG. 3 shows how a scanner crosses and scans a moving sheet of material in accordance with embodiments herein. Using the system shown in FIG. 1 for reference, a scan may be made at the first scanner 8, with the scanning head(s) for the first scanner 8 traveling back and forth across the sheet of material 90.

In this example, the sheet 90 has coating material applied in patches such as patches 91-1, 91-2, 91-3, .... 91-4 (which are collectively referred to as patches 91), with discontinuities or gaps in each of the MD and CD. Coating material may be applied in strips instead, if desired, such that gaps are present in the CD but not the MD. The material 90 may also include one or more splices (not illustrated).

As the scanner travels back and forth along a scan path (e.g., the first scan path 68), the edges of the patches 91 and the splice (when present) may each be detected by the scanning heads. For instance, the present disclosure provides several ways to determine patch locations. For example, a camera system such as those described herein can be mounted a given location such as between the coater and scanner to detect patch positions, and when combined with machine speed data, permits precise tracking and prediction of patch locations on the sheet 90. The coating system itself can provide direct signals that indicate patch timing information, which can be integrated with machine speed data to calculate exact patch positions and permit coordination between coating and scanning operations. Additionally, the systems herein can identify machine direction coat-edge transitions through processing to detect boundaries between coated and uncoated areas, allowing determination of patch positions from these detected transitions. For cross-direction measurements, the patch location requirements may be less critical since the lane edges remain relatively fixed. Their positions can be determined from recipe information, manual user entry, and/or through vision and edge detection systems. In the machine direction, patch arrival can be precisely calculated, for instance, since the relative distances and web speeds are known. This comprehensive approach to patch location detection provides redundancy and flexibility in implementing the delayed-start scanning algorithm while ensuring optimal scanning coverage of the patches being manufactured. The system's ability to accurately determine patch locations through one or more of multiple methods can facilitate precise timing of scan starts and/or calculation of an amount of delay time and/or otherwise helps achieve the core goal of minimizing unscanned areas while maintaining efficient production speeds e.g., at 20-100 m/min.

The scanner will move to an 'off-sheet' position so that it can measure the reference material without interfering with the sheet movement. In such embodiments, an individual sensor profile of scan path 68 can extend between edge 54 and edge 52. However, in some embodiments one or more additional sensors can be added e.g., at a midpoint point of the scanner 8, etc. That is, the methods and systems herein are applicable to any quantity of sensors.

While such patterns in the form of the scanning measurements paths or profiles 68, 78 and can be useful, the approaches herein provide an improvement thereon. For instance, the first scan or scanning measurement path 68 and the second scan or scanning measurement path 78 may have a relatively large amount of unscanned area located therebetween. For instance, a distance (e.g., taken in a normal direction relative to the first and second scan paths 68, 78 can be equal to or greater than about 5 millimeters. Having this relatively large amount of unscanned area (which is not overlaid by a scan path) located between adjacent (e.g., immediately adjacent) scan paths may lead to inaccurate detection of defects such as the inability to readily detect the occurrence of systematic defects (e.g., that occur in substantially the same coordinate axis such as a having substantially the same cross-direction position, albeit at a different machine-direction position of the substrate surface. Moreover, even when defects are detected having the relatively large amount of area can make it particularly difficult to deconvolve machine-direction defects from cross-direction defects. Hence, it may be difficult to visualize (e.g., in terms of a machine-direction profile or a cross-direction profile) the defect and/or may be difficult to determine the corresponding remediation action (e.g., adjusting an actuator, etc.) to remedy the defect.

Thus, as illustrated in FIG. 3, a scan path 85 of the third scan can be positioned substantially equidistantly between the scan paths of the first scan 68 and the second scan 78, as described herein. For instance, the third scan can be initiated from the same edge (e.g., edge 54) as each of the first scan and the second scan, but the third scan be initiated from a position that is substantially between (e.g., in the machine-direction) the initiation point and the ending point of the first scan path 68, as illustrated in FIG. 3, among other possibilities.

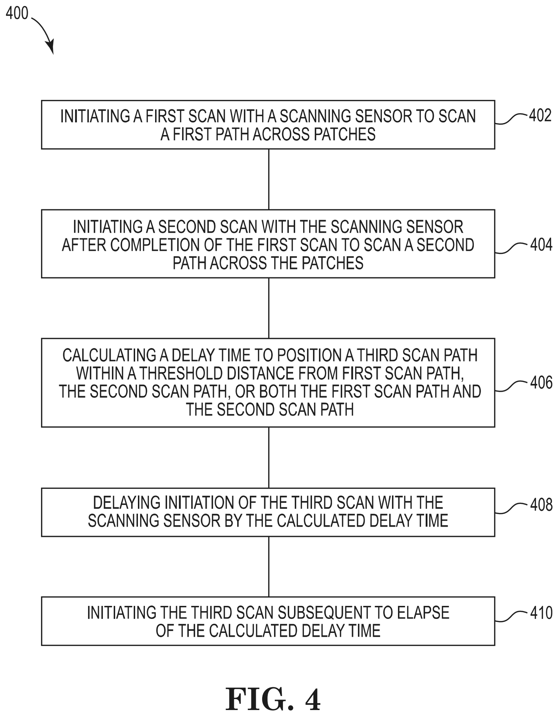

FIG. 4 illustrates another example of a method 400 for delayed scanning of a moving discontinuous sheet of patches in a manufacturing process. At 402, the method 400 comprises initiating a first scan with a scanning sensor, such as those described herein, to scan a first path across the patches. As mentioned, the patches can be electrode patches formed on a substrate such as a foil substrate. The first path can be comprised of a combination of a scan conducted while the scanning sensor is moving in a first direction along and a scan conducted while the scanning sensor is moving a second direction opposing the first direction. That is, an individual scan and resulting scan path herein can be formed of the data obtained from the scanning sensor making one initial pass in a cross-direction across the moving sheet or substrate and data obtained from the scanning sensor making one return pass (e.g., back to the initial start position). The initial pass and the return pass can be made as the same scanning speed and rates of acceleration. Hence, a scan such as the first scan at least due to the movement of the sheet of substrate in the machine-direction can be manifested as a substantially V-shaped scan profile (e.g., as illustrated in FIG. 3).

At 404, the method 400 includes initiating a second scan with the scanning sensor to scan a second path across the patches. The second scan can be performed at substantially the same scanning speed as the first scan. Thus, the second scan can have the same relatively V-shaped scanning profile as the first scan.

In some embodiments, the second scan can be initiated without delay or immediately following completion of the first scan. Hence, the initial position of the second scan (e.g., the initial position of the second scan path) can coincide with the final position of the scanner after completing the first scan (e.g., the final position of the first scan path).

However, in some embodiments, the second scan can be initiated subsequent to elapse of a calculated delay time. For instance, in some embodiments delay time can be calculated, as detailed herein, to permit the sheet or substrate to advance in the machine-direction thereby placing a scan path such as a second scan path of a scan within a threshold distance of a previous scan such as the first scan. In such embodiments, each subsequent scan (e.g., a third scan, a fourth scan, etc.) can be delayed by the same amount of delay time to maintain uniform spacing between scan paths and/or to ensure that each scan path is within a threshold distance of one or more adjacent scan paths.

At 406, the method 400 can include calculating a delay time, as described herein. For instance, the method 400 can include calculating a delay time to position a third scan path of the scanning sensor between the first scan path and the second scan path, in some embodiments. For example, the delay time can be calculated to position the third scan equidistantly between the second scan path (of the second scan) and the first scan path (of the first scan).

Alternatively, the method 400 can include calculating the delay time to position a scan (e.g., the second scan, the third scan, etc.) that is subsequent to the first scan within a threshold distance of one or more adjacent scans (e.g., at least one previous scan that is immediately adjacent thereto). For example, the method 400 can include calculating a delay time to position the third scan within a thresh(old distance of the first scan, the second scan, or both the first scan and the second scan. For instance, the threshold distance can be a distance extending in the machine-direction from a previous scan path of the first scan, among other possibilities.

In some embodiments, the delay time (e.g., by which one or more scans subsequent to the first scan are delayed) can be equal to or greater than about 50 milliseconds. For instance, the delay time can be 250 milliseconds or less (e.g., an amount of time in a range from about 0 millisecond to about 250 milliseconds or about 50 milliseconds to about 250 milliseconds), among other possible values. These are merely examples and the amount of delay imparted to be varied based on a particular application e.g., based on a size of the sheet, a size of the patches, scanning speed, and/or speed (in the machine direction) of the sheet, among other factors.

The delay time can be calculated based on a speed of the moving discontinuous sheet of patches, a shape or size of the moving discontinuous sheet of patches, a shape or size of the patches, a scanning frequency of the scanning sensor, a distance between the first scan path and the second scan path; or any combination thereof. For instance, in some embodiments, a distance between adjacent scan paths such as the first and second scan paths can be determined (e.g., based on the speed of the media or substrate in the machine-direction, based on a scanning speed of the scanner, and/or based on a time (e.g., an initiation or completion time) associated with one or more scans such as the first and second scans). In such instances, the delay time can be calculated to permit the media to advance in the machine-direction and thereby place the subsequent scan path between the previous scan paths (e.g., between the first and second scan paths) and/or within a threshold distance of a previous scan. For example, a distance (e.g., 10 millimeters) between the first and second scan paths (from the previous first and second scans, respectively) may be equal to or greater than a threshold distance (e.g., 5 millimeters) and hence the subsequent scan path (e.g., a third scan patch of the third scan) can be positioned between (e.g., 5 millimeters from each of the first and second scan paths). Alternatively or in addition, the delay time can be calculated to maintain a scan within a threshold distance of another scan. For instance, the delay time can be calculated to maintain the second scan and/or the first scan within a threshold distance from a previous scan path of the first scan, as detailed herein.

At 408, the method 400 can include delaying initiation of a scan. For instance, the method 400 can include delaying initiation of the second scan and/or the third scan by the calculated delay time. For example, the method 400 can include delaying the third scan by the calculated delay time. Due to imparting the delay, the initial position of the third scan does not coincide with the final position of the scanner after completing the second scan. While imparting the delay, the scanning sensor (e.g., scanner) can remain at a given position (e.g., can remain positioned adjacent to an edge of the moving sheet or substrate at the same relative location at which a previous scan e.g., the second scan was completed). In any case, the approaches herein can desirably delay one or more scans to minimize an amount of a unscanned area located between adjacent previously scanned paths until a distance between adjacent scan paths is less than a threshold distance (e.g., equal to or less than 5 millimeters, 4 millimeters, 3, millimeters, 2 millimeters, 1 millimeter, etc.) to promote aspects herein such as readily detecting manufacturing defects (e.g., systematic defects occurring periodically) in discontinuous manufactured products such as in roll-to-roll lithium ion battery electrodes, discerning between machine and cross-direction defects, and yet can also minimize a total quantity of scans to detect the presence of such manufacturing defects (e.g., by interpolating between scan data from adjacent scan paths that are less than the threshold distance apart).

At 410, the method 400 can include initiating a scan subsequent to elapse of the delay time. For instance, one or more of the motors described herein can receive a signal from a controller or other type of computing device to initiate a scan (e.g., the third scan) subsequent to elapse of the delay time, among other possibilities. For example, the method 400 can include initiating a third scan subsequent to elapse of the delay time. The third scan can be performed at substantially the same scanning speed as the first scan and the second scan. Hence, the third scan can have the same relatively V-shaped scanning profile as the first scan and the second scan.

In some embodiments, the second scan can be initiated a first amount of time after completion of the first scan and the third scan can be initiated a second amount of time after completion of the second scan. For instance, the first amount of time may be equal to about 0 milliseconds or can be equal to a non-zero amount of time. Stated differently, in some embodiments the second can be initiated immediately after completion of the first scan. However, in some embodiments, the second scan can be delayed for an amount of time (e.g., to maintain the second scan path within a threshold distance of the first scan path), as described herein. In such instances, the first amount of time can be equal to about 50 milliseconds to about 250 milliseconds, among other possible values. In some embodiments, an amount of delay time can be optimized to bisect a largest remaining unscanned area on the sheet after one or more previous scans. For instance, the first amount of time can be optimized to bisect a largest remaining unscanned area on a sheet after the first scan (e.g., a largest amount of unscanned area on a representative patch of the sheet). For example, in some embodiments, a first scan can be initiated with a scanning sensor at an initial position to scan a first scan path across a moving discontinuous sheet of patches. A delay time can be calculated to position a second scan path of a second scan a threshold distance (e.g., which is configured to bisect a largest unscanned area on the representative patch of the sheet) from the first scan path. In such embodiments, subsequent to completion of the first scan and elapse of a first instance of the delay time, the second scan can be initiated to position the second scan path within the threshold distance from the first scan path. In such embodiments, each of the subsequent scans after the first scan can be delayed. For instance, subsequent to completion of the second scan and elapse of a second instance of the delay time, the third scan can be initiated to position the third scan path within the threshold distance from the second scan path, and so forth such at each of the scans are positioned substantially the same threshold distance apart. Hence, the first instance of the delay time and the second instance of the delay time can be equal.

In some embodiments, the second amount of time (i.e., the delay time) by which initiation of the third scan is delayed after completing the second scan can be greater than about 50 milliseconds. For instance, the second amount of time can be a value in a range from about 50 milliseconds to about 250 milliseconds.

The delay times are a function of the line speed, the patch periodicity, and the scanning speed (here assumed to be constant for simplicity of explanation). As a non-limiting example, if the patches repeat every at a given interval with a machine-direction length between a first edge of a first patch and a first edge of a second patch (Lp)=500 mm, and the line speed is vline=1000 mm/s, then the same relative position of every patch goes by the scanner every Lp/vline = 0.5 seconds = 500 ms. From FIG. 3 it can be seen that since the time between these equivalent scanned positions is 500 ms, we would want to place the next scan in the middle of the unscanned area, that is 250 ms from the first scan position. Scanner periodicity can be also accounted for. For instance, if the scan speed is nominally 200 mm/s and the width of the sheet is 1400 mm, then a forward and reverse traversal takes 2x1400/200 = 14 s. In practice, it may take a longer because the scanner will usually scan some off-sheet distance and it may take some time for the scanning sensor to accelerate and decelerate. If the scanner, with no additional delays, completed a traversal in 15.95 s, then it would be ready to scan again 500 - mod(15.95,0.5)= 50 ms before the equivalent scan position. Therefore, as illustrated, the delay added would be 50 ms + 250 ms = 300 ms. In one embodiment, the algorithms herein, would permit scanning the middle of the next, biggest, unscanned area until a threshold was reached. For example, if the threshold was 5 mm which is equivalent to 5 mm / 1000 mm/s = 5 ms, the entire sheet could be scanned in a minimum of 500 ms/5 ms = 100 scans. After 1 scan, in this example, the maximum unscanned MD distance would be Lp/2 = 250 mm, it would take two scans to scan these, leaving 4 areas of 125 mm, which could be scanned with an additional four scans leaving 67.5 mm etc., until the threshold (e.g., 5 mm between immediately adjacent scan paths) is reached. As illustrated in FIG. 3, the scan paths of the scans can overlay the substantially the same relative locations (e.g., when accounting for manufacturing tolerances, etc.) on successive patches (in the machine direction). For instance, the scan paths are positioned at substantially the same relative locations on each of patches 91-2 and 91-4.

After the entire sheet is scanned to within a threshold distance the first time, one embodiment would rescan in the same order from the first scan position. Note that in the treatment for a displayed 2D profile (i.e. colormap), the first scan may be erased, or a filter may be applied, for instance, the computed profile at that scan position could be put through an exponential filter (1/2:1/2, for 2 scans, 1/3:2/3 for three scans, 1/4:3/4 for 4 scans until a filter factor is reached. If the filter factor is 0.2. then all profiles after this may be filtered by the new profile being 0.2=1/5 of the new scan + 4/5 of the previously computed scan).

In another embodiment, the next scan could be triggered as soon as an unscanned area greater than the threshold was anticipated. If the same variables are used as in the previous embodiment, if the scanner was ready to scan 50 ms before the next scan path, the scanner may scan with zero delay. At the end of every scan, the scanner may wait until the next area greater than the threshold arrived at the scanner MD position, and then the scanner could initiate a subsequent scan. This approach would continue until full scanning coverage is achieved, and then the scans would be replaced in the same order as previously described. This embodiment may quickly scan the complete area, but if it is desired to most quickly visualize potential defects, starting with a low resolution, and filling in scans to increase resolution, then the first algorithm mentioned herein may be employed.

In some embodiments, the second scan can be performed after the first scan (without any intervening scans) and the third scan can be performed after the second scan (without any intervening scans). However, in some embodiments one or more intervening scans may be present.

In some embodiments, the method 400 can include making additional scans (in addition to the first, second, and third scans) of the moving sheet or substrate. The additional scan can be located further along the moving sheet of substrate (e.g., in a machine-direction than each of the first, second, and third scan). For example, a sequence of three additional scans (e.g., a fourth scan, a fifth scan, and a sixth scan) can be performed using the same parameters and relative timing as the previous scans (e.g., the first scan, the second scan, and the third scan, respectively). That is, the methods herein can include continuing scanning of a moving sheet or substrate until a threshold distance between adjacent scan paths is less than a threshold distance e.g., thereby permitting accurate interpolation of defect data between the scan paths.

For instance, the method 400 can include initiating a fourth scan with the scanning sensor after completion of the third scan to scan a third path across the patches, where the fourth scan can be initiated a third amount of time after completion of the third scan; and the third amount of time can be less than the second amount of time. In such embodiments, the third amount of time can be substantially equal to the first amount of time. In some embodiments, the fourth scan can be initiated from a position at which the scanner completed the second scan.

The method 400 can include initiating a fifth scan with the scanning sensor after completion of the fourth scan, where: the fifth scan can be initiated a fourth amount of time of completion of the fourth scan; and the fourth amount of time can be less than the second amount of time. The fourth amount of time can be substantially equal to the first amount of time. The fifth scan can be initiated immediately after completing the fourth scan. For instance, the fifth scan can be initiated immediately after completing the fourth scan from a position at which the fourth scan was completed. The method 400 can include delaying initiation of a sixth scan with the scanning sensor by the calculated delay time (e.g., that is the same or different than an amount of delay time associated with the third scan) and initiating the sixth scan subsequent to elapse of the delay time to scan a sixth scan path across the moving discontinuous sheet of patches. For instance, the calculated delay time for the third scan can be equal to the calculated delay time for the sixth scan. Hence, similar to the third scan path (which is located between the first scan path and the second scan path), the sixth scan path can be located between the fourth scan path and the fifth scan path. In such embodiments, the each of the scans (e.g., the first, second, third, fourth, fifth, and sixth scan path) can be conducted at the same scanning speed. Each of the scans (e.g., first scan, second scan, third scan, fourth scan, fifth scan, and sixth scan, etc.) can have the same V-shaped profile resulting from the scans each occurring at a known scanning speed and rate of acceleration.

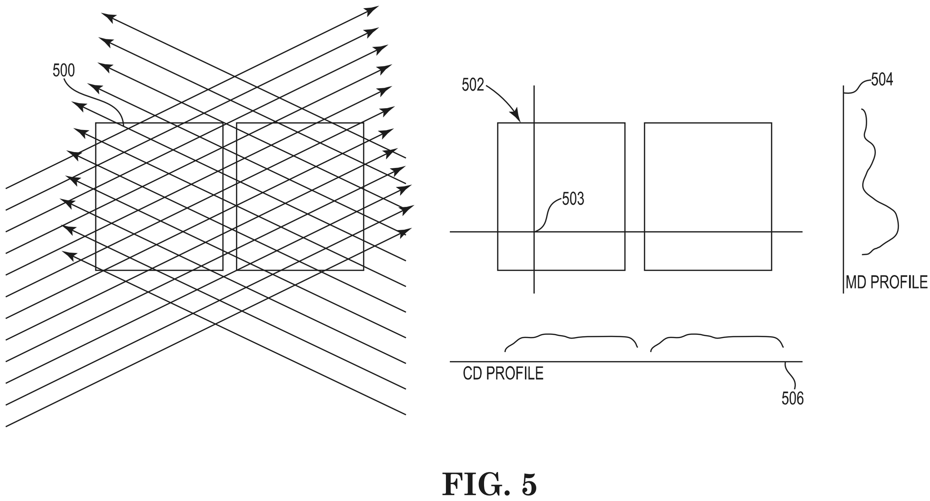

As mentioned, the methods herein can include continuing scanning of a moving sheet or substrate until a threshold distance between adjacent scan paths is less than a threshold distance e.g., thereby permitting accurate interpolation of defect data between the scan paths. For instance, FIG. 5 illustrates and example of a scanned moving sheet or substrate 90 in which the distance taken in a machine direction between adjacent scan paths (e.g., as represented by element 86 in FIG. 3) is less than the threshold distance. As illustrated in FIG. 3, each of the respective scan paths can be spaced that same distance apart. Having each of the respective scan paths be spaced the same distance apart and that is less than the threshold distance can promote aspects herein such as promoting t accurate interpolation of defect data between the scan paths, discerning between machine-direction and cross-direction defects, and/or minimizing a total quantity of scans (e.g., reducing an amount of time and/or cost associated with scanning the moving sheet or substrate).

In some embodiments, the method 400 can include generating a complete visualization of the moving discontinuous sheet of electrode patches. For instance, the complete visualization can be generated based on data from the scan and interpolated data (e.g., data interpolated for unscanned regions located between scan paths).

In some embodiments, the method 400 can include displaying a visual representation of the complete visualization of the electrode patches and displaying a visual representation of one or more manufacturing defects in the electrode patches. For instance, the method 400 can include displaying (e.g., concurrently displaying) a visual representation of the complete visualization of the moving sheet and respective visual representations of each of the machine-direction profile and the cross-direction profile of the of the one or more of the patches on the moving sheet.

For instance, FIG. 5 is a view 500 of complete visualization 502 of the moving sheet and a representative machine-direction and cross-direction profiles 504, 506 of the moving sheet at relative MD location and relative CD location respectively. The machine-direction profile 504 and cross-direction profile 506 can be generated based on the scanning data from delayed scanning of moving sheets and interpolated data that is interpolated (e.g., with linear interpolation, etc.) between the scans. The complete visualization 502 of the moving sheet (e.g., of each of the electrode patches) can be displayed as a color map (e.g., where different measurement values are represented by different colors, shading, different marks, or different identifiers such as different numeric identifiers), among other possibilities such as contour maps. For instance, the complete visualization 502 can be represented as a three-dimensional map, etc. In any case, the complete visualization 502 can represent different mechanical properties or profiles of different regions 503 of the moving sheets (e.g., regions of the moving sheet that have different thickness, different drop weights, among other types of non-uniformity i.e., defects).

The MD and CD positions of the MD and CD profiles can be adjusted by machine operators or engineers to gain detailed information about potential defects.

One or more visual representations of a machine-direction profile and/or a cross-direction profile can be displayed. For instance, each of a machine-direction profile and a cross-direction profile of one or more patches (e.g., an average profile of each of the patches, etc.) can be displayed. The machine-direction profile and/or cross-direction profile can represent different thicknesses, different drop-weights, and/or otherwise represent any non-uniform areas (e.g., defects) in one or more patches on the moving sheet or substrate. As mentioned, providing both a cross-direction profile 506 and a machine-direction profile 504 can promote aspects herein such as permitting readily identifying machine-direction and cross-direction defects and implementing the corresponding type of remediation measure to mitigate or eliminate such defects.

It is important to note that the various system functions may be implemented in a distributed manner across multiple similar computing platforms, thereby distributing the processing load for enhanced performance and scalability. Alternatively, the system may be implemented through appropriate programming of a single computing hardware platform, depending on the specific requirements of the implementation.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for delayed scanning of a moving discontinuous sheet of patches in a manufacturing process, comprising:
initiating a first scan with a scanning sensor to scan a first path across the patches;
initiating a second scan with the scanning sensor after completion of the first scan to scan a second path across the patches;
calculating a delay time to position a third scan path of within a threshold distance from first scan path, the second scan path, or both the first scan path and the second scan path;
delaying initiation of a third scan with the scanning sensor by the calculated delay time; and
initiating the third scan subsequent to elapse of the delay time.

2. The method of claim 1, wherein:
the second scan is initiated a first amount of time after completion of the first scan; and
the third scan is initiated a second amount of time after completion of the second scan.

3. The method of claim 2, further comprising calculating the delay time to position the third scan path between the first scan path and the second scan path.

4. The method of claim 3, wherein the second amount of time is greater than about 50 milliseconds; and, optionally, wherein the second amount of time is 250 milliseconds or less.

5. The method of any preceding claim, further comprising calculating the delay time to position the third scan path equidistant between the first scan path and the second scan.

6. The method of any preceding claim, further comprising calculating the delay time based on:
a speed of the moving discontinuous sheet of patches;
a shape or size of the moving discontinuous sheet of patches;
a shape or size of the patches;
a scanning frequency of the scanning sensor;
a distance between the first scan path and the second scan path; or
any combination thereof.

7. The method of any preceding claim , further comprising initiating a fourth scan with the scanning sensor after completion of the third scan to scan a fourth scan path across the patches, wherein:
the fourth scan is initiated a third amount of time after completion of the third scan; and
the third amount of time is less than the second amount of time.

8. The method of claim 7, wherein the third amount of time is substantially equal to the first amount of time.

9. The method of claim 8, further comprising initiating a fifth scan with the scanning sensor after completion of the fourth scan to scan a fifth scan path across the patches, wherein:
the fifth scan is initiated a fourth amount of time of completion of the fourth scan; and
the fourth amount of time is less than the second amount of time.

10. The method of any preceding claim, further comprising:
interpolating between scan paths including the first scan path, the second scan path, and the third scan path to generate a complete visualization of the moving discontinuous sheet of patches; and
displaying a visual representation of the complete visualization of the patches.

11. The method of any preceding claim, further comprising:
generating machine-direction and cross-direction profiles from scan paths including the first scan path, the second scan path, and the third scan path; and
displaying respective visual representations of the machine-direction profile and the cross-direction profile.

12. A non-transitory, computer-readable medium including instructions that when executed by a processor cause the processor to:
initiate a first scan with a scanning sensor at an initial position to scan a first scan path across a moving discontinuous sheet of patches;
calculate a first delay time to position a second scan path of a second scan a threshold distance from the first scan path;
subsequent to completion of the first scan and elapse of a first delay time, initiate the second scan to position the second scan path within the threshold distance from the first scan path;
calculate a second delay time to position a second scan path of a second scan a threshold distance from the first scan path; and
subsequent to completion of the second scan and elapse of a second delay time, initiate the third scan to position the third scan path within the threshold distance from the second scan path.

13. A system for scanning electrode patches, comprising:
a scanning sensor configured to traverse a moving discontinuous sheet of electrode patches, wherein the moving discontinuous sheet of electrode patches; and
a controller configured to:
initiate a first scan with a scanning sensor at an initial position to scan a first path across the moving discontinuous sheet of electrode patches;
initiate a second scan with the scanning sensor after completion of the first scan to scan a second path across the moving discontinuous sheet of electrode patches, wherein the second scan is initiated a first amount of time after completion of the first scan;
calculate a delay time to position a third scan path of the scanning sensor equidistant between the first scan path and the second scan path;
delay initiation of a third scan with the scanning sensor by the calculated delay time;
initiate the third scan immediately subsequent to elapse of the delay time, wherein the third scan is initiated a second amount of time after completion of the second scan, wherein the second amount of time is larger than the first amount of time,
interpolating between scan paths including the first scan path, the second scan path, and the third scan path to generate a complete visualization of the moving discontinuous sheet of electrode patches; and
displaying:
a visual representation of the complete visualization of the electrode patches including a visual representation of one or more manufacturing defects in the electrode patches;
a machine-direction profile of one or more of the electrode patches;
a cross-direction profile of the one or more of the electrode patches; or any combination thereof.

14. The system of claim 13, wherein:
the electrode patches comprise discrete coated areas of the sheet that are separated by uncoated or substantially uncoated areas of the sheet; and
the scanning sensor is configured to measure at least one of a basis weight or coating thickness of at least the electrode patches.

15. The system of either of claims 13 or 14, wherein:
the scanning sensor operates at the same scanning speed for each of the first scan, the second scan, and the third scan; and
the moving discontinuous sheet of electrode patches moves in the machine-direction at a speed in a range from about 20 to about 100 meters per minute.
